# EUROPEAN PATENT SPECIFICATION

(11) **EP 3 809 192 B1**
(45) Date of publication and mention of the grant of the patent: **06.12.2023**
(21) Application number: 19203566.5
(22) Date of filing: 16.10.2019
(51) Int. Cl.: G02F 1/03, H01S 3/00

(54) **ELECTRO-OPTIC MODULATOR**
ELEKTROOPTISCHER MODULATOR
MODULATEUR ÉLECTRO-OPTIQUE

(43) Date of publication of application: 21.04.2021
(73) Proprietor: Qubig GmbH, 81541 München (DE)
(72) Inventor: MARTINEZ DORANTES, Miguel, 80799 München (DE); VOGT, Enrico, 80801 München (DE)
(74) Representative: Prüfer & Partner mbB Patentanwälte · Rechtsanwälte

(56) References cited:
- EP-A1- 3 502 771
- JP-A- S6 114 622
- US-A- 3 406 356
- US-A- 4 849 719
- US-A1- 2006 007 966

## Description

The present invention relates to an electro-optic modulator for modulating a beam of electro-magnetic radiation.

An electro-optic modulator is configured to modify, for example, the phase, the frequency, the polarization or the amplitude of a beam of electro-magnetic radiation, such as a laser beam. Electro-optic modulators are used in a variety of applications, such as optical communication and scientific instruments. A resonant standing wave electro-optic modulator generally has a housing that comprises a resonant cavity with a block of a crystalline electro-optic material arranged as a modulator element therein. The resonant cavity is configured to accommodate a standing wave of a modulating energy, for example microwave energy, that causes a change in the refractive index of the crystalline material. The microwave energy typically is phase-matched or quasi-phase matched with the laser radiation to be modulated.

The resonant cavity is generally formed by inner walls of the housing and the modulator element is held in place by clamping the modulator element between two opposing walls. These walls may exert a pressure or stress onto the modulator element. If the modulator element consists of a crystal material the applied pressure or stress may cause an undesirable birefringence of the crystal material which may adversely affect the modulated laser beam or the efficiency of modulation.

In order to reduce the pressure exerted onto the modulator element, a layer of soft formable material, for example indium, may be provided between the modulator element and the respective walls of the cavity. However, the paste-like material may absorb energy of the standing wave generated within the housing, thus reducing the efficiency of the electro-optic modulator. In addition, pressure or stress may still be exerted to the crystalline material, causing birefringence of the crystal.

US 2006/0007966 A1 discloses an electro-optical modulator module for use in a CO₂ laser system, comprising an active optical crystal and metal electrodes placed on either side of the crystal. Soft metal cushions are placed between the crystal and the electrodes in order to ensure good thermal and electrical contact between the electrodes and the crystal, the metal cushions made of a material of sufficient softness and conductivity. A wall structure is provided that presses the electrodes against the metal cushions.

It is therefore an object of the present invention to provide an alternative or improved electro-optic modulator in which in particular the modulator element is firmly held in place while at the same time reducing the pressure applied to the modulator element.

This object is achieved by an electro-optic modulator according to claim 1. Further developments and forms of implementation are given in the dependent claims.

The electro-optic modulator according to the invention serves for modulating a beam of electro-magnetic radiation and comprises a housing and a cavity located in the housing, the cavity having a first wall and a second wall opposed to each other and a modulator element arranged within the cavity. The first wall and the second wall are adapted to receive the modulator element in an interspace formed between them and at least the first wall comprises an elastically deformable portion that contacts the modulator element.

In this context, the term "elastically deformable portion" denotes a portion of the first wall that is adapted to deform upon application of a force and to return to its original shape and position when the force is removed. Preferably, the elastically deformable portion is a resilient portion.

By providing the elastically deformable portion that contacts the modulator element, for example, a portion of the first wall is provided that is configured to adapt to the contour of the modulator element without applying considerable pressure onto the modulator element, thus strongly suppressing or even preventing a birefringence to be induced in the modulator element. The elastically deformable portion may thus serve to cushion the modulator element, which may enable even the use of brittle sensitive crystal materials, such as Potassium Dideuterium Phosphate (KD*P, DKDP) crystals, as the modulator element.

For example, one of the first wall and the second wall may be a top wall of the cavity and the other one of the first wall and the second wall may be a bottom wall of the cavity. Alternatively, the first and second walls may be opposing lateral walls of the cavity.

Preferably, the modulator element is substantially shaped as a rectangular cuboid, wherein a first side face of the rectangular cuboid contacts the first wall of the cavity and a second side face of the rectangular cuboid contacts the second wall of the cavity, which first and second side faces are opposed to each other. This may provide for a design of the modulator element and the cavity that is easy to implement, for example. Further preferably, the elastically deformable portion of the first wall of the cavity contacts the entire first side face of the rectangular cuboid.

Preferably, the modulator element is held between the first wall and the second wall of the cavity, further preferably by friction. This means preferably that the modulator element is clamped between the first and second walls. Thus, for example, the modulator element may be firmly held in its desired position within the cavity without the need for any further fixation elements.

Alternatively or in addition, the modulator element is preferably attached to the elastically deformable portion, further preferably glued to the elastically deformable portion, in particular by an electrically conductive glue. Thus, for example, a good contact between the modulator element and the elastically deformable portion can be established and/or the pressure required to hold the modulator element in place can be reduced or minimized.

In accordance with the present invention, the elastically deformable portion is stretched between opposing non-deformable portions of the first wall, preferably in a horizontal direction. This may provide for firmly holding the elastically deformable portion at a desired location, for example. Preferably, the electro-optic modulator further comprises a pressing element configured to exert a pressure onto the elastically deformable portion, wherein the pressing element further preferably comprises a pressing surface that contacts the elastically deformable portion and an adjustment element for adjusting the pressure exerted onto the elastically deformable portion. Such a pressing element makes it possible, for example, to adjust the frictional force that holds the modulator element in the interspace between the first and second walls.

Preferably, the second wall comprises an elastically deformable portion that contacts the modulator element. Thus, the modulator element may be provided in an interspace between two opposing elastically deformable portions, which may provide for cushioning the modulator element particularly well.

In accordance with the present invention, the elastically deformable portion comprises a sheet consisting of an electrically conductive material, preferably copper. The housing comprises a hollow space on a side of the sheet that faces away from the modulator element. Thus, for example, a resilient, i.e. elastically deformable, portion may be provided that substantially absorbs no energy of the standing wave or only to a very minor extent.

Preferably, the elastically deformable portion has a thickness ranging from 5 to 50 micrometers.

Preferably, the modulator element comprises a crystal exhibiting the electro-optic effect. For example, the present invention may be particularly advantageous when a crystal material is used as the modulator element, since the cushioning effect of the deformable portion is well-suited to protect even brittle-sensitive crystals. The elastically deformable portion can also have the advantage of reducing the pressure and/or stress exerted onto the modulator element (in particular, the crystal) due to thermal expansion of the cavity, for example.

Preferably, the electro-optic modulator further comprises a coupling device, further preferable shaped as a rod, for inputting modulating energy into the cavity such that a resonant standing wave is generated within the cavity. This allows, for example, for the coupling device along with sidewalls of the resonant cavity to serve substantially as a loop coupler.

In the following, further features and expediencies of the present invention are set out in the description and the accompanying drawing, of which:
- Fig. 1: is a schematic perspective illustration of the cavity of a resonant standing wave electro-optic modulator according to an exemplary embodiment of the present invention.
- Fig. 2: is a schematic view in cross-section of the resonant standing wave electro-optic modulator of Fig. 1 showing more details.

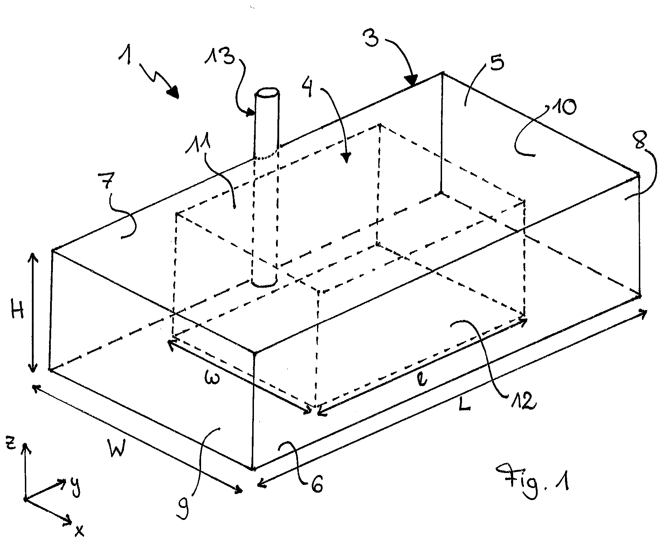

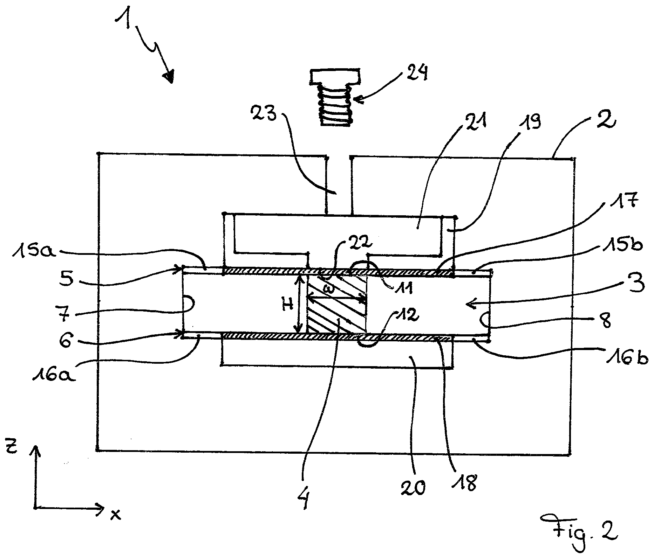

Hereafter, an exemplary embodiment of a resonant standing wave electro-optic modulator according to the present invention will be described with reference to Figs. 1 and 2. The electro-optic modulator 1 comprises a housing 2 and a resonant cavity 3 located within the housing 2. A modulator element in the form of a block 4 of a crystalline material is provided within the resonant cavity 3. The crystalline material is preferably an electro-optic material that is configured to change its refractive index with an applied electric field, i.e. exhibits the electro-optic effect. For example, Potassium Dideuterium Phosphate (DKDP) or any other suitable material may be used. For the sake of simplicity, Fig. 1 schematically shows the resonant cavity 3 without the housing 2. Fig. 2 schematically shows a section through the housing 2 and the resonant cavity 3 in a direction perpendicular to an incident light beam.

As can best be seen from Fig. 1, the resonant cavity 3 substantially has the shape of a rectangular cuboid and is bounded by a top wall 5 and a bottom wall 6, two lateral walls 7, 8, as well as a front wall 9 and a rear wall 10. The top and bottom walls 5, 6 will be explained in more detail with reference to Fig. 2. The top and bottom walls 5, 6 are opposed to each other, i.e. the top and bottom walls 5, 6 are located opposite from one another with the block 4 of crystalline material located between them. Similarly, the lateral walls 7, 8 and the front and rear walls 9, 10 are opposed to each other. The front and rear walls 9, 10 are configured to allow a beam of electromagnetic radiation, in particular a laser beam, to pass through them. For example, they can each comprise an aperture or an optical window to let the laser beam pass. The walls 5-10 of the resonant cavity 3 are preferably made of a material having a high electrical conductivity, such as a metal.

The walls 5-10 are dimensioned such that they delimit a substantially rectangular cuboid having a width W, a height H and a length L. The volume WxHxL of the resonant cavity 3 is selected to support a resonant standing wave of the modulating microwave energy within the cavity 3 when it includes the crystalline block 4. The width W defines an x-direction, the length L defines a y-direction and the height H defines a z-direction of an orthogonal coordinate system. Preferably, the x- and y-directions span a horizontal plane and the z-direction extends in a vertical direction.

The block 4 of crystalline material shown in Fig. 1 is substantially shaped as a rectangular cuboid having a length I in the y-direction, a width w in the x-direction and a height H in the z-direction. Preferably, the length I of the crystalline block 4 is smaller than the length L of the resonant cavity 3 and its width w is smaller than the width W of the resonant cavity 3, whereas the block 4 preferably has the same height H as the resonant cavity 3. Hence, the crystalline block 4 is arranged in the resonant cavity 3 such that it is spaced apart from the lateral walls 7, 8 and the front and rear walls 9, 10, thus forming a space between each of the lateral and front and rear walls 7-10 and the crystalline block 4. An upper face 11 of the crystalline block 4 contacts the top wall 5 of the resonant cavity 3 and a lower face 12 of the crystalline block 4 contacts the bottom wall 6 of the resonant cavity 3. The upper and lower faces 11, 12 of the crystalline block 4 are opposed to each other. Preferably, the crystalline block 4 is held between the top wall 5 and the bottom wall 6 of the resonant cavity 3 by means of friction.

Furthermore, a coupling element shaped as a rod 13 is provided that extends into the housing 2 (not shown in Fig. 1) from above for inputting modulating energy, for example microwave energy, into the resonant cavity 3 such that a resonant standing wave is generated within the cavity 3.

As can best be seen from Fig. 2, the upper wall 5 of the resonant cavity 3 comprises first and second non-deformable portions 15a, 15b and an elastically deformable portion in the form of an upper sheet 17 consisting of an electrically conductive material, preferably copper. Likewise, the lower wall 6 of the resonant cavity 3 comprises first and second non-deformable portions 16a, 16b and a elastically deformable portion in the form of a lower sheet 18 consisting of an electrically conductive material, preferably copper. In the x-direction, i.e. along the width W of the cavity 3, the non-deformable portions 15a, 15b of the upper wall 5 are opposed to each other with the upper sheet 17 located between them. Likewise, the non-deformable portions 16a, 16b of the lower wall 6 are opposed to each other with the lower sheet 18 located between them in the x-direction. The upper and lower sheets 17, 18 are each fixed on the respective non-deformable portions 15a, 15b, 16a, 16b and are stretched between the respective non-deformable portions 15a, 15b, 16a, 16b. The sheets 17, 18 may each have are thickness ranging from 5 to 50 micrometers.

In the x-direction, the upper and lower sheets 17, 18 each extend at least over the width w of the crystalline block 4, preferably exceed the width w. In an alternative that is not in accordance with the present invention, the upper and lower walls 5, 6 of the cavity 3 may be entirely formed of the upper and lower sheets 17, 18, respectively, i.e. provided without the non-deformable portions 15a, 15b, 16a, 16b, such that the upper and lower sheets 17, 18 each extend over the entire width W (see Fig. 1) of the cavity 3. In this case, the sheets 18, 19 may be fixed to the lateral walls 7, 8 and/or the front and rear walls 8, 9 (see Fig. 1) of the cavity 3. Furthermore, with respect to the x-direction, the upper and lower sheets 17, 18 are each provided in a section of the upper or lower wall 5, 6 that contacts the crystalline block 4. Thus, the upper sheet 17 contacts the upper face 11 of the block 4 and the lower sheet 18 contacts the lower face 12 of the block 4.

In the y-direction, the sheets 17, 18 extend at least over the entire length I of the crystalline block 4 (not shown in Fig. 2). They may extend up to the entire length L of the cavity 3 (see Fig. 1). Preferably, the entire area of the upper face 11 of the crystalline block 4 contacts the upper sheet 17. Likewise, it is preferred that the entire area of the lower face 12 of the crystalline block 4 contacts the lower sheet 17.

On the sides of the sheets 17, 18 that face away from the crystalline block 4, the housing 2 comprises upper and lower hollow spaces 19, 20. The hollow spaces 19, 20 are preferably filled with a gas, such as air. The area and geometric shape of each of the hollow spaces 19, 20 in the x-y-plane preferably matches the area and geometric shape of the respective sheet 18, 19 in the x-y-plane. In Fig. 2, only the dimension of the hollow spaces 19, 20 in the x-direction is shown to be identical to the dimension of the sheets 18, 19 in the x-direction, whereas the y-direction is perpendicular to the drawing plane in Fig. 2 and therefore not visible.

Furthermore, the electro-optic modulator 1 comprises a stamp or piston 21 located in the upper hollow space 19. The piston is preferably made of or partially made of a soft material such as rubber, for example a metal piston with a soft end, in particular a rubber end. The piston 21 has a lower surface 22 that is a soft surface and contacts the upper sheet 17. The area and geometric shape of the lower surface 22 of the piston 21 preferably matches the area and geometric shape of the upper face 11 of the crystalline block 4, i.e. the lower surface 22 extends over the width w of the crystalline block 4 in the x-direction, as shown in Fig. 2, and over the length I of the crystalline block 4 in the y-direction (not shown in Fig. 2). The piston 21 is located in the hollow space 19 so that the lower surface 22 contacts the upper sheet 17 in the region of the upper face 11 of the crystalline block 4 with respect to the x-y-plane (in Fig. 2 only shown for the x-direction).

In the z-direction, the piston 21 is preferably slightly smaller than the upper hollow space 19 so as to permit movement of the piston 21 within the hollow space 19 in or opposite to the z-direction.

Vertically, i.e. in z-direction, above the piston 21 a threaded hole 23 is provided in the housing 2. The threaded hole 23 is preferably configured as a through-hole extending from an outer surface of the housing to the upper hollow space 19. Furthermore, a screw 24 is provided that is configured to be advanced within the threaded hole 23 downwards, i.e. towards the crystalline block 4, by screwing it in, and to be advanced upwards, i.e. away from the crystalline block 4, by screwing it out. When screwing in the screw 24, the screw 24 contacts the piston 21 and upon further advancing the screw 24 downwards, the lower surface 22 of the piston 21 presses onto the upper sheet 17 and thus acts as a pressing surface, consequently causing the sheet 17 to deform and press against the upper face 11 of the crystalline block 4. Thus, the crystalline block 4 is clamped between the upper and lower sheets 17, 18 and held between them by means of friction. The elastic deformability of the lower sheet 18 may prevent the pressure applied to the block 4 from becoming too large. Deformation of the sheets 18, 19 in the z-direction is enabled by the hollow spaces 19, 20 provided above and below the sheets 18, 19 as well as by the resonant cavity 3 provided between them. In order to release the crystalline block 4, the screw 24 may be advanced upwards, i.e. away from the crystalline block 4. The screw 24 and the threaded hole 23 thus serve as an adjustment element for adjusting the pressure exerted onto the sheets 18, 19.

The piston 21, the threaded hole 23 and the screw 24 thus form a pressing element that is configured to exert a pressure onto the upper sheet 17. Likewise, a pressing element may be provided that is configured to exert a pressure onto the lower sheet 18 (not shown in the Figures). It should be understood that several threaded holes 23 may be provided, in particular along the length I of the crystalline block 4, i.e. in the y-direction (not shown in Fig. 2).

During operation of the electro-optic modulator 1, in order to modulate a beam of electro-magnetic radiation such as a laser beam, the beam (not shown in the figures) enters the resonant cavity 3 through the front wall 9 and passes the entire length I of the crystalline block 4, thereby being modulated. The modulated beam then exits the resonant cavity 3 through the rear wall 10. The beam generally has a beam axis (not shown in the figures) which is preferably parallel to the y-axis, i.e. the beam preferably propagates in the y-direction through the resonant cavity 3.

Further modifications of the electro-optical modulator are possible without deviating from the scope of the present invention. For example, the resonant cavity 3 may have a shape different from the rectangular cuboid shape shown in Fig. 1. In particular, one or several of the walls 5-10 may differ from the rectangular shape shown in Fig. 1 or the resonant cavity 3 may have any other suitable shape. Similarly, the crystalline block 4 may differ from the rectangular cuboid shape shown in the figures.

In the embodiment described above, the deformable portions 17, 18 are provided as portions of the upper and lower walls 5, 6 of the resonant cavity 3. However, the deformable portions may alternatively or in addition be provided as portions of the lateral walls 7, 8 or the front and rear walls 9, 10 of the cavity 3. It is also possible that only one of the walls 5-10 of the cavity 3 comprises a deformable portion that contacts the crystalline block 4, or that more than two of the cavity's walls 5-10 each comprise deformable portions. In addition or alternatively, the deformable portion may only be provided along a section of the respective wall 5-10 in the y-direction, i.e. along the length I of the crystalline block 4.

Alternatively or in addition, the crystalline block 4 can be attached to at least one of the deformable portions 17, 18, preferably glued to at least one of the deformable portions. Further preferably, an electrically conductive glue is used.

Furthermore, a pressing element or pressing mechanism other than the one describe above may be provided to exert a pressure onto the elastically deformable portion. Alternatively, the electro-optic modulator may be provided without a pressing element and without a pressing mechanism.

The deformable portion or portions may be formed of other material than copper.

Moreover, the fixation of the sheet or deformable portion is not limited to the example described above.

## Claims

1. An electro-optic modulator (1) for modulating a beam of electro-magnetic radiation, comprising
a housing (2) and a cavity (3) located in the housing (2), the cavity (3) having a first wall (5) and a second wall (6) opposed to each other and a modulator element (4) arranged within the cavity (3), wherein the first wall (5) and the second wall (6) are adapted to receive the modulator element (4) in an interspace formed between them, wherein
at least the first wall (5) comprises an elastically deformable portion (17) that contacts the modulator element (4), wherein the elastically deformable portion is stretched between opposing non-deformable portions (15a, 15b) of the first wall and comprises a sheet (17) consisting of an electrically conductive material, and
wherein the housing (2) comprises a hollow space (19) on a side of the sheet (17) that faces away from the modulator element (4).

2. The electro-optic modulator according to claim 1, wherein the modulator element (4) is substantially shaped as a rectangular cuboid, wherein a first side face (11) of the rectangular cuboid contacts the first wall (5) of the cavity (3) and a second side face (11, 12) of the rectangular cuboid contacts the second wall (6) of the cavity (3), which first and second side faces are opposed to each other.

3. The electro-optic modulator according to claim 1 or 2, wherein the modulator element (4) is held between the first wall (5) and the second wall (6) of the cavity (3), preferably by friction.

4. The electro-optic modulator according to one of claims 1 to 3, wherein the modulator element (4) is attached to the elastically deformable portion (17), preferably glued to the elastically deformable portion, in particular by an electrically conductive glue.

5. The electro-optic modulator according to one of claims 1 to 4, further comprising a pressing element (21) configured to exert a pressure onto the elastically deformable portion.

6. The electro-optic modulator according to claim 5, wherein the pressing element comprises a pressing surface (22) that contacts the elastically deformable portion and an adjustment element (23, 24) for adjusting the pressure exerted onto the elastically deformable portion.

7. The electro-optic modulator according to one of claims 1 to 6, wherein the second wall (6) comprises an elastically deformable portion (18) that contacts the modulator element (4).

8. The electro-optic modulator according to one of claims 1 to 7, wherein the sheet (17) consists of copper.

9. The electro-optic modulator according to one of claims 1 to 8, wherein the elastically deformable portion (17, 18) has a thickness ranging from 5 to 50 micrometers.

10. The electro-optic modulator according to one of claims 1 to 9, wherein the modulator element (4) comprises a crystal exhibiting the electro-optic effect.

11. The electro-optic modulator according to one of claims 1 to 10, further comprising a coupling device, preferably shaped as a rod (13), for inputting modulating energy into the cavity (3) such that a resonant standing wave is generated within the cavity.

## Patentansprüche

1. Elektrooptischer Modulator (1) zum Modulieren eines Strahls elektromagnetischer Strahlung, umfassend
ein Gehäuse (2) und einen Hohlraum (3), der sich in dem Gehäuse (2) befindet, wobei der Hohlraum (3) eine erste Wand (5) und eine zweite Wand (6), die einander gegenüberliegen, und ein Modulatorelement (4), das innerhalb des Hohlraums (3) angeordnet ist, aufweist, wobei die erste Wand (5) und die zweite Wand (6) ausgebildet sind, das Modulatorelement (4) in einem Zwischenraum, der zwischen ihnen gebildet ist, aufzunehmen, wobei
zumindest die erste Wand (5) einen elastisch verformbaren Abschnitt (17) umfasst, der das Modulatorelement (4) berührt, wobei der elastisch verformbare Abschnitt zwischen gegenüberliegenden nicht verformbaren Abschnitten (15a, 15b) der ersten Wand gespannt ist und eine Folie (17) umfasst, die aus einem elektrisch leitfähigen Material besteht, und
wobei das Gehäuse (2) einen Hohlraum (19) auf einer dem Modulatorelement (4) abgewandten Seite der Folie (17) umfasst.

2. Elektrooptischer Modulator nach Anspruch 1, wobei das Modulatorelement (4) im Wesentlichen als ein rechteckiger Quader geformt ist, wobei eine erste Seitenfläche (11) des rechteckigen Quaders die erste Wand (5) des Hohlraums (3) berührt und eine zweite Seitenfläche (11, 12) des rechteckigen Quaders die zweite Wand (6) des Hohlraums (3) berührt, wobei die erste und die zweite Seitenfläche einander gegenüberliegen.

3. Elektrooptischer Modulator nach Anspruch 1 oder 2, wobei das Modulatorelement (4) zwischen der ersten Wand (5) und der zweiten Wand (6) des Hohlraums (3) gehalten ist, vorzugsweise durch Reibung.

4. Elektrooptischer Modulator nach einem der Ansprüche 1 bis 3, wobei das Modulatorelement (4) an dem elastisch verformbaren Abschnitt (17) angebracht ist, vorzugsweise an den elastisch verformbaren Abschnitt geklebt ist, insbesondere durch einen elektrisch leitfähigen Klebstoff.

5. Elektrooptischer Modulator nach einem der Ansprüche 1 bis 4, weiter umfassend ein Druckelement (21), das ausgebildet ist, einen Druck auf den elastisch verformbaren Abschnitt auszuüben.

6. Elektrooptischer Modulator nach Anspruch 5, wobei das Druckelement eine Druckfläche (22), die den elastisch verformbaren Abschnitt berührt, und ein Einstellelement (23, 24) zum Einstellen des auf den elastisch verformbaren Abschnitt ausgeübten Drucks umfasst.

7. Elektrooptischer Modulator nach einem der Ansprüche 1 bis 6, wobei die zweite Wand (6) einen elastisch verformbaren Abschnitt (18) umfasst, der das Modulatorelement (4) berührt.

8. Elektrooptischer Modulator nach einem der Ansprüche 1 bis 7, wobei die Folie (17) aus Kupfer besteht.

9. Elektrooptischer Modulator nach einem der Ansprüche 1 bis 8, wobei der elastisch verformbare Abschnitt (17, 18) eine Dicke im Bereich von 5 bis 50 Mikrometern aufweist.

10. Elektrooptischer Modulator nach einem der Ansprüche 1 bis 9, wobei das Modulatorelement (4) einen Kristall umfasst, der den elektrooptischen Effekt aufweist.

11. Elektrooptischer Modulator nach einem der Ansprüche 1 bis 10, weiter umfassend eine Kopplungsvorrichtung, die vorzugsweise als ein Stab (13) ausgebildet ist, zum Einspeisen von Modulationsenergie in den Hohlraum (3), so dass eine resonante stehende Welle innerhalb des Hohlraums erzeugt wird.

## Revendications

1. Un modulateur électro-optique (1) pour moduler un faisceau de rayonnement électromagnétique, comprenant
un boîtier (2) et une cavité (3) située dans le boîtier (2), la cavité (3) ayant une première paroi (5) et une deuxième paroi (6) opposées l'une à l'autre et un élément modulateur (4) agencé à l'intérieur de la cavité (3), dans lequel la première paroi (5) et la deuxième paroi (6) sont adaptées pour recevoir l'élément modulateur (4) dans un espace intermédiaire formé entre elles, dans lequel
au moins la première paroi (5) comprend une portion élastiquement déformable (17) qui est en contact avec l'élément modulateur (4), dans lequel la portion élastiquement déformable est étirée entre des portions non déformables opposées (15a, 15b) de la première paroi et comprend une feuille (17) constituée d'un matériau électriquement conducteur, et
dans lequel le boîtier (2) comprend un espace creux (19) sur un côté de la feuille (17) qui est orienté dans une direction s'éloignant de l'élément modulateur (4).

2. Le modulateur électro-optique selon la revendication 1, dans lequel l'élément modulateur (4) a sensiblement la forme d'un parallélépipède rectangle, dans lequel une première face latérale (11) du parallélépipède rectangle est en contact avec la première paroi (5) de la cavité (3) et une seconde face latérale (11, 12) du parallélépipède rectangle est en contact avec la seconde paroi (6) de la cavité (3), lesquelles première et seconde faces latérales étant opposées l'une à l'autre.

3. Le modulateur électro-optique selon la revendication 1 ou 2, dans lequel l'élément modulateur (4) est maintenu entre la première paroi (5) et la seconde paroi (6) de la cavité (3), de préférence par friction.

4. Le modulateur électro-optique selon l'une des revendications 1 à 3, dans lequel l'élément modulateur (4) est fixé à la portion élastiquement déformable (17), de préférence collé à la portion élastiquement déformable, en particulier par une colle électriquement conductrice.

5. Le modulateur électro-optique selon l'une des revendications 1 à 4, comprenant en outre un élément de pression (21) configuré pour exercer une pression sur la portion élastiquement déformable.

6. Le modulateur électro-optique selon la revendication 5, dans lequel l'élément de pression comprend une surface de pression (22) qui est en contact avec la portion élastiquement déformable et un élément d'ajustement (23, 24) pour ajuster la pression exercée sur la portion élastiquement déformable.

7. Le modulateur électro-optique selon l'une des revendications 1 à 6, dans lequel la seconde paroi (6) comprend une portion élastiquement déformable (18) qui est en contact avec l'élément modulateur (4).

8. Le modulateur électro-optique selon l'une des revendications 1 à 7, dans lequel la feuille (17) est constituée de cuivre.

9. Le modulateur électro-optique selon l'une des revendications 1 à 8, dans lequel la portion élastiquement déformable (17, 18) a une épaisseur allant de 5 à 50 micromètres.

10. Le modulateur électro-optique selon l'une des revendications 1 à 9, dans lequel l'élément modulateur (4) comprend un cristal présentant l'effet électro-optique.

11. Le modulateur électro-optique selon l'une des revendications 1 à 10, comprenant en outre un dispositif de couplage, de préférence en forme de tige (13), pour introduire de l'énergie de modulation dans la cavité (3) de telle sorte qu'une onde stationnaire résonante est générée à l'intérieur de la cavité.
